# EUROPÄISCHE PATENTSCHRIFT

(11) **EP 2 654 955 B1**
(45) Veröffentlichungstag und Bekanntmachung des Hinweises auf die Patenterteilung: **15.07.2015**
(21) Anmeldenummer: 11794751.5
(22) Anmeldetag: 13.12.2011
(51) Int. Cl.: B01L 3/00, B01F 1/00, B01F 7/00, B01F 7/16, B01F 11/00, B01F 13/00, B01F 15/02, G01N 35/10

(54) **VERFAHREN ZUM MISCHEN WENIGSTENS EINER PROBENLÖSUNG MIT REAGENZIEN**
METHOD FOR MIXING AT LEAST ONE SAMPLE SOLUTION WITH REAGENTS
PROCÉDÉ DE MÉLANGE D'AU MOINS UNE SOLUTION D'ÉCHANTILLON AVEC DES RÉACTIFS

(30) Priorität: 20.12.2010 EP 10196050; 11.02.2011 EP 11001134
(43) Veröffentlichungstag der Anmeldung: 30.10.2013
(73) Patentinhaber: Boehringer Ingelheim Microparts GmbH, 44227 Dortmund (DE)
(72) Erfinder: LANGE, Berthold, 55216 Ingelheim Am Rhein (DE); SCHOEN, Christian, 55216 Ingelheim Am Rhein (DE); EICHMANN, Tobias, 55216 Ingelheim Am Rhein (DE)
(74) Vertreter: Simon, Elke Anna Maria
(86) Internationale Anmeldenummer: PCT/EP2011/072659
(87) Internationale Veröffentlichungsnummer: WO 2012/084615

(56) Entgegenhaltungen:
- WO-A1-97/26539
- WO-A1-2010/064503
- DE-A1- 19 900 347
- DE-A1-102009 016 712
- DE-U1-202004 019 444
- US-A- 3 780 992
- US-A- 4 874 114
- US-A- 5 443 791
- US-A1- 2007 297 277

## Beschreibung

Die Erfindung betrifft ein Verfahren zum Mischen wenigstens einer Probenlösung mit Reagenzien in wenigstens einer Kammer einer mikrofluidischen Cartridge.

Die Bio- und Gentechnologie hat in den letzten Jahren enorm an Bedeutung gewonnen. Eine Grundaufgabe dieser Technologie ist der Nachweis von bestimmten biologischen Stoffen (Analyten) in Fluidproben. Durch den Nachweis von Analyten in Fluidproben, beispielsweise in einer Blutprobe eines Patienten, können unter Anderem Krankheitserreger nachgewiesen werden, wodurch dem Arzt die Stellung einer Diagnose erleichtert wird was somit auch eine schnelle Behandlung und Infektionskontrolle fördert.

In der Bio- und Gentechnologie finden dabei zunehmend mikrofluidische Bauteile bzw. mikrofluidische Cartridges Anwendung.

Mikrofluidische Cartridges werden vielfältig in Form von Einmaltests eingesetzt, wobei in der Regel so genannte Lateral Flow Cartridges Verwendung finden, deren Bauteile Längen- und Breitenmessungen aufweisen, die einige Millimeter bis Zentimeter betragen.

Zur Durchführung von Tests wird in der Regel einer mit einem Biosensor (Biochip) versehenen mikrofluidischen Cartridge eine zu testende Analyseflüssigkeit (z. B. Blut, Urin oder Speichel) über geeignete Mittel zugeführt. Eine Zugabe von Probenlösung zur Cartridge erfolgt vor oder nach dem Einsetzen der Cartridge in ein entsprechendes Analysegerät.

Der Begriff "mikro" soll dabei implizieren, dass zumindest einer der vorhandenen Kanäle und/oder Kavitäten (Kammern) zumindest in einer geometrischen Ausdehnungsrichtung eine Dimension im Mikrometermaßstab aufweist, also mit einer Dimension von weniger als einem Millimeter.

Unter dem Begriff "mikrofluidisch" wird verstanden, dass ein druckinduzierter und/oder kapillarer Flüssigkeitsfluss durch und in den Mikrokanälen und/oder Mikrokavitäten erfolgt. Dabei wird unter einem "mikrofluidischen Bauteil" ein Bauteil verstanden, welches wenigstens derartige Mikrokanäle bzw. Mikrokavitäten für die Speicherung und den Transport von Flüssigkeiten bzw. Fluiden aufweist.

Eine "mikrofluidische Cartridge" stellt eine (gegebenenfalls aus mehreren mikrofluidischen Bauteilen bestehende) Vorrichtung für die Analyse von Flüssigkeiten dar.

Der Nachweis von geringen Konzentrationen biologischer und anorganischer Substanzen in biologischen Proben ist häufig schwierig. Die Tests (Assays) für diese Art von Nachweisen in mikrofluidischen Cartridges sind in der Regel mit mehreren Verfahrensschritten verbunden.

Der Bedarf bei modernen mikrofluidischen Cartridges zielt auf eine Verkürzung in der Messzeit zwischen Aufgabe der Probenlösung und letztendlich dem Erscheinen des Messwertes ab. Zudem geht der Trend auch dahin, mit immer kleineren Mengen an Probenlösung zuverlässige Messungen zu ermöglichen.

Bei Durchführungen von Messungen in einer mikrofluidischen Cartridge wird üblicherweise eine geringe Menge einer Probenlösung durch eine oder mehrere Kammern geführt, welche Reagenzien oder Konditionierungsmittel enthalten, die dazu dienen, die für das Inkontaktbringen mit den Reagenzien vorgesehene Probe vorzubereiten. Die Probenlösung wird daher in der Regel sequentiell durch unterschiedliche Kammern geführt, welche über Mikrokanäle miteinander verbunden sind, durch die sich die Probenlösung mittels Kapillarkräften oder einer angewandten Kraft, wie etwa einer Zentrifugalkraft oder einer angelegten Druckdifferenz, bewegt.

Der Nachweis eines gesuchten Analyten erfolgt in der mikrofluidischen Cartridge letztendlich über die spezifische Bindung oder Reaktion des in der Probenlösung vorhandenen Analyten mit einem so genannten Reagenz (Erkennungsreaktion). Im Allgemeinen ermöglicht es die Spezifizität der Erkennungsreaktion, auch Analyten in komplexen Proben, wie z. B. Körperflüssigkeiten ohne oder nur mit geringer vorheriger Aufreinigung qualitativ oder quantitativ bestimmen zu können.

Die Reagenzien werden bei den mikrofluidischen Cartridges zumeist in einem bestimmten Bereich bzw. in einer bestimmten Kammer immobilisiert. Die Probenlösung wird dabei im Verlauf des fluidischen Protokolls in flüssiger Form aus einem anderen Bereich der mikrofluidischen Cartridge zu diesen Reagenzien gebracht, um die Reagenzien aufzulösen und die Erkennungsreaktion durchzuführen. Beim Transport der Probenlösung von Kammer zu Kammer kann es jedoch zu Verlusten an Probenlösung kommen, da beispielsweise beim Kapillartransport Kammern und Kanäle nicht ausreichend entleert werden können. Dies ist insbesondere bei den mittlerweile üblichen kleinen Probenvolumina von unter 10 Mikroliter kritisch.

Weiterhin kann der Transport der Probenlösung eine Verfälschung des Messergebnisses z. B. durch unspezifische Bindung oder Adhäsion zur Folge haben.

Bei einer unspezifischen Bindung binden die Analyten mit anderen Stoffen als gewollt und gehen so als Reaktionsstoff verloren. Bei einer Adhäsion gehen die interessierenden Analyten durch Anlagerung an Oberflächen/Wänden zum Teil verloren.

In der DE 2009 016 712 A1 ist eine mikrofluidische Cartridge (Einweg-Testkassette) zur Bioassay von Analyten sowie eine Vorrichtung, in der die mikrofluidische Cartridge eingesetzt wird, bekannt.

Die dort beschriebene mikrofluidische Cartridge weist einen strukturierten Körper auf, in dem Kavitäten, die miteinander durch Kanäle verbunden sind, eingebracht sind. Es ist ein Einlass zur Einführung einer Analyten enthaltenden Probenlösung und eine Reagenzienkammer vorgesehen, in der ein oder mehrere Reagenzien zur Reaktion mit dem Analyten oder zum Vermischen mit der Probenlösung untergebracht sind. Ferner ist eine Detektionskammer vorgesehen, in der ein Signal zum Nachweis oder zur quantitativen Analyse des Analyten detektiert wird. Die Detektionskammer weist dabei ein Fenster zur Detektion eines Signals auf. Die Reagenzien sind in der Reagenzienkammer in trockener Form deponiert, wobei die Probenlösung durch zeitlich und volumenmäßig genau definierte Luftstöße innerhalb der mikrofluidischen Cartridge transportiert wird.

Insgesamt soll so ein kostengünstiges, lagerfähiges und einfach zu bedienendes Mittel zur Durchführung von biochemischen Testverfahren bereitgestellt werden, um Analyten qualitativ und/oder quantitativ zu bestimmen. Ferner wird in der Schrift auch eine Kontrolle der Reaktionsbedingungen, insbesondere Volumen und Zeiten, aber auch ein optimales Vermischen von Probenlösung und Reagenzien genannt.

Letztlich wird jedoch hier der bekannte Weg, innerhalb einer mikrofluidischen Cartridge die Probenlösung zu den Reagenzien zu transportieren, nicht verlassen.

WO 97/265 39 offenbart ein Verfahren gemäß dem Oberbegriff des Anspruch 1.

Es ist Aufgabe der vorliegenden Erfindung, ein Verfahren gemäß dem Oberbegriff von Anspruch 1 bereitzustellen, bei dem die oben genannten Nachteile des Standes der Technik abgemildert sind.

Für das Verfahren wird diese Aufgabe gelöst mit den kennzeichnenden Merkmalen von Patentanspruch 1.

Hinsichtlich des Verfahrens geht die Erfindung aus von einem Verfahren zum Mischen von wenigstens einer Probenlösung mit wenigstens einem Reagenz in wenigstens einer Kammer einer mikrofluidischen Cartridge.

Erfindungsgemäß ist nun vorgesehen, dass wenigstens ein Reagenz mittels wenigstens eines beweglichen Bauteils der Probenlösung zugeführt und mit dieser in Kontakt gebracht wird.

Das Reagenz wird also in eine Kammer gebracht, in der die Probenlösung bereits vorliegt. Die Probenlösung muss somit nicht mehr im fluidischen Netzwerk bewegt werden, wodurch die Verluste an Probe bzw. Analyt geringer ausfallen.

Beispielsweise kann denkbar sein, dass zwei aufeinander folgende Reaktionen einer Probenlösung mit je einem Reagenz für einen Assay erforderlich ist.

Nach dem Stand der Technik würde man hierfür zwei Kammern benötigen, in denen jeweils eines der Reagenzien in geeigneter Weise immobilisiert ist. Zunächst muss die Probenlösung in die das erste Reagenz enthaltende Kammer geleitet werden. Die Probenlösung reagiert dann mit diesem Reagenz und die gesamte (vorprozessierte) Flüssigkeit wird anschließend durch Kapillar- oder Druckkräfte in die nächste Kammer weitergeleitet, um dann mit dem zweiten Reagenz zu reagieren.

Nach dem erfindungsgemäßen Verfahren ist es nun möglich, beide Reaktionen (ohne Transport der Probenlösung) in ein und derselben Kammer ausführen zu lassen. Beispielsweise könnte dazu das erste Reagenz in der Kammer bereits deponiert sein und nach Zuführung der Probenlösung mit diesem reagieren. Nach einer bestimmten Zeit könnte dann das zweite Reagenz mittels des beweglichen Bauteils der Probenlösung in der Kammer zugeführt und mit dieser in Kontakt gebracht werden.

Denkbar ist aber auch, gleich mehrere Reagenzien an dem beweglichen Bauteil zu halten. Erfindungsgemäß werden zwei verschiedene Reagenzien auf dem beweglichen Bauteil getrennt voneinander gelagert werden, an dessen Vorder- und Rückseite. Dies kann für bestimmte Anwendungsfälle durchaus von Vorteil sein.

Wenn das bewegliche Bauteil in einer im Wesentlichen translatorischen Bewegung in Richtung der Probenlösung bewegt wird, führt dies zu einer Vereinfachung des Verfahrens und die Vorrichtung zur Durchführung des Verfahrens kann konstruktiv vergleichsweise einfach gehalten werden.

Um eine schnelle und gute Erkennungsreaktion zu erzielen, ist eine gründliche Vermischung der Probenlösung mit den Reagenzien anzustreben. Es ist daher sehr von Vorteil, wenn das bewegliche Bauteil zumindest während des Kontaktes des Reagenzes mit der Probenlösung eine rotatorische Bewegung vollführt. Eine gute Vermischung wird gesteigert wenn das bewegliche Bauteil zumindest während des Kontaktes des Reagenzes mit der Probenlösung eine oszillierende Bewegung oder erfindungsgemäß eine kreisende Bewegung vollführt. Selbstverständlich sind natürlich auch Überlagerungen der genannten Bewegungen denkbar und durchaus von Vorteil.

Es ist zweckmäßig wenn das bewegliche Bauteil zumindest mit dem Teil, an welchem das Reagenz gehalten ist, derart in die Probenlösung eingetaucht wird, dass das Reagenz vollständig von der Probenlösung umgeben ist.

Das oder die Reagenzien können dabei vorteilhaft durch Trocknung auf dem beweglichen Bauteil immobilisiert sein. Dies kann beispielsweise konventionell oder auch durch Gefriertrocknung erfolgen. Der Vorteil bei der Gefriertrocknung liegt darin, dass das oder die getrockneten Reagenzien in Form einer porösen Masse immobilisiert sind, die eine große Oberfläche bildet und sich daher bei Kontakt mit der Probenlösung schnell auflöst.

Es ist erfindungsgemäß vorgesehen, dass vor der Kontaktierung des Reagenzes mit der Probenlösung das bewegliche Bauteil wenigstens einen verschlossenen Zugang zur Kammer öffnet. Hierdurch wird die Kammer vor Verunreinigungen von außen geschützt und eine in die Kammer bereits eingebrachte Probenlösung kann auch bei Transport beispielsweise einer die Kammer enthaltenden mikrofluidischen Cartridge nicht nach außen gelangen und so zu einer Kontamination der Umwelt bzw. von Gerätschaften führen.

Zur Verbesserung der Durchmischung von Probenlösung und Reagenz ist das bewegliche Bauteil spatelartig ausgestaltet. Darüber hinaus bieten die Flächen eines Spatels geeignete Ablageflächen, um Reagenzien zu deponieren. Weitere Vorteile und Ausgestaltungen der Erfindung werden anhand von Ausführungsbeispielen deutlich, was mit Hilfe der beiliegenden Figuren näher erläutert werden soll. Dabei bedeuten
- Fig. 1: eine prinziphafte Darstellung einer ersten Ausführungsform, wobei ein Ausschnitt aus einer mikrofluidischen Cartridge ersichtlich ist,
- Fig. 2: eine prinziphafte Darstellung eines Analysegerätes, in welches die mikrofluidische Cartridge gemäß Fig. 1 eingeschoben ist und
- Fig. 3: eine zweite Ausführungsform der erfindungsgemäßen Vorrichtung.

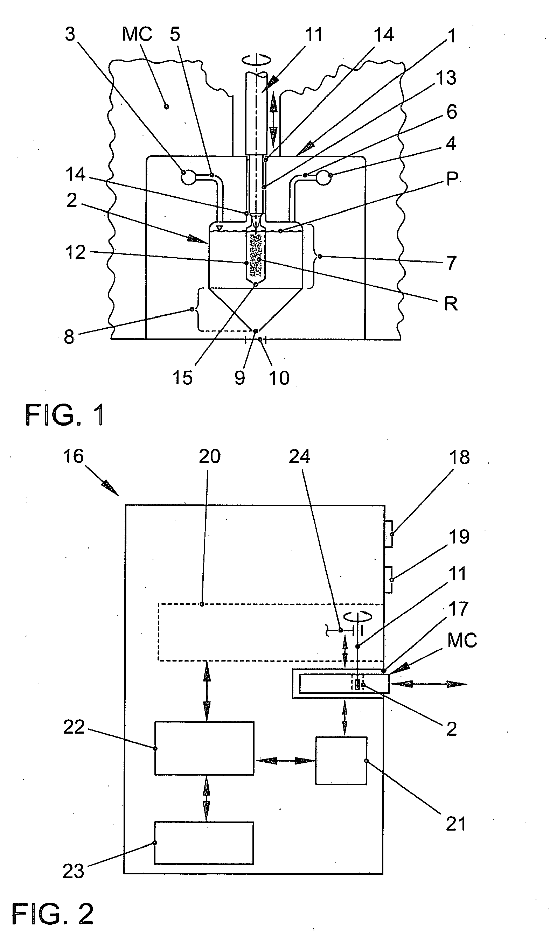

Zunächst wird auf die Fig. 1 Bezug genommen.

Darin ist eine mikrofluidische Cartridge MC mit einem mikrofluidischen Bauteil 1 (Biochip) ersichtlich. Das mikrofluidische Bauteil 1 umfasst eine Assaykammer 2 zur Durchführung eines Bioassays. Über eine Befüllöffnung 3 und eine Entlüftungsöffnung 4, welche jeweils über entsprechende Kanäle 5 und 6 mit der Assaykammer 2 verbunden sind, ist eine entsprechende Probenlösung P der Assaykammer 2 zuführbar bzw. aus dieser auch wieder abführbar.

Die Assaykammer 2 weist einen ersten Kammerbereich 7 mit konstantem Querschnitt im Millimeterbereich und einen zweiten Kammerbereich 8 auf, welcher sich konisch hin zu einer Messfläche 9 verjüngt. Die Messfläche 9 ist transparent und dient zum optischen Auslesen eines sich nach einer bestimmten Erkennungs- bzw. Immunreaktion gebildeten und im Bereich der Messfläche immobilisierten Erkennungs- bzw. Immunkomplexes (nicht näher dargestellt). Das konische Zulaufen des zweiten Kammerbereiches 8 bis zur Messfläche 9 erleichtert die Messung, auch wenn vergleichsweise nur wenig Antikörper und Mittel zur Immobilisierung zur Verfügung stehen.

Die Messung erfolgt über eine optische Messeinheit 21, welche über ein Fenster 10 optischen Zugang zur Messfläche 9 erhält (vergleiche auch Fig. 2).

In Fig. 1 ist ferner ersichtlich, dass in die Probe P ein stabförmiger Reagenzienträger 11 mit einem spatelförmigen Ende 12 eingetaucht ist. Das spatelförmige Ende 12 ist an seiner Vorderseite und an seiner Rückseite (nicht ersichtlich) jeweils mit Reagenzien R versehen. So sind auf der Vorderseite Fänger-Antikörper und auf der Rückseite Detektions-Antikörper an dem spatelförmigen Ende 12 gehalten. Die Reagenzien R sind dabei vorzugsweise gefriergetrocknet auf dem spatelförmigen Enden 12 immobilisiert. Insgesamt weist der Reagenzienträger 11 also in etwa ein stabförmiges Aussehen auf, wobei er mit seinem spatelförmigen Ende 12 über einen in dem mikrofluidischen Bauteil 1 befindlichen, kanal- oder kerbenförmigen Zugang 13 zur Assaykammer 2 gelangen kann.

Die Assaykammer 2 ist vor Zuführung der Reagenzien R durch den Reagenzienträger 11 mittels zweier folienartiger Verschlüsse 14 verschlossen. Dies vermindert die Gefahr von Verunreinigungen der Assaykammer 2 bzw. der Probenlösung P oder auch der Umwelt. Durch das Vorhalten mehrerer folienartiger Verschlüsse 14 kann dies auch bei Beschädigung eines der Verschlüsse 14 sichergestellt werden.

Um nun zur Assaykammer 2 zu gelangen, muss der Reagenzienträger 11 mit seinem spatelförmigen Ende 12 die zwei folienartige Verschlüsse 14 durchstoßen. Unterstützend ist das spatelförmige Ende 12 dazu mit einer Spitze 15 ausgestattet. Die Folie der Verschlüsse 14 kann zweckmäßigerweise aus elastischem Material sein, um eine abdichtende Wirkung der Verschlüsse 14 auch nach deren Durchstoßen zu fördern.

In Fig. 1 ist der Reagenzienträger 11 mit seinem spatelförmigen Ende 12 bereits soweit in die Assaykammer 2 eingeführt, dass die Reagenzien R vollends in die Probenlösung P eingetaucht sind.

Das Zubringen der Reagenzien R zur Probenlösung P erfolgt also durch eine einfache translatorische Bewegung des Reagenzienträgers 11 in Richtung der Probenlösung P bzw. der Assaykammer 2. Zusätzlich ist durch Pfeile angedeutet, dass der Reagenzienträger während des Vermischens der Reagenzien R mit der Probenlösung P eine rotatorische, rührende Bewegung durchführen kann. Durch diese zusätzlichen Bewegungen des Reagenzienträgers 11 kann eine Vermischung der Reagenzien R mit der Probenlösung P deutlich verbessert werden.

Die Form eines spateiförmigen Reagenzienträgers 11 hat den Vorteil, dass unter Umständen auch ein gewöhnlicher Einmalspatel aus dem Laborbedarf mit entsprechend geringen Kosten Verwendung finden kann.

In Fig. 2 ist nun äußerst schematisch ein Analysegerät 16 in Form eines Tischgerätes ersichtlich, in das die mikrofluidische Cartridge MC nach Einbringung der Probenlösung P zur Durchführung des Bioassays und zur entsprechenden Auswertung einführbar ist.

Die mikrofluidische Cartridge MC ist dabei vorzugsweise ein mittels Spritzgusstechnik abgeformtes Bauteil.

Die Benutzung der Vorrichtung erfolgt nun folgendermaßen:
Die mikrofluidische Cartridge MC wird aus der Verpackung entnommen und die Probenlösung P wird in geeigneter Weise der Assaykammer 2 zugeführt. Dies kann beispielsweise über einen entsprechenden Probeaufgabebereich durch den Patienten selbst oder auch durch einen Arzt erfolgen. Die entsprechenden Befüllöffnungen in der mikrofluidischen Cartridge MC werden dann in geeigneter Weise verschlossen, beispielsweise durch eine Klebelasche. Anschließend wird die mikrofluidische Cartridge MC in einen entsprechenden Aufnahmeschlitz 17 des Analysegerätes 16 eingeschoben.

Das Analysegerät 16 besitzt einen Startknopf 18 zum Starten des jeweils über einen Programmwahlschalter 19 auszuwählenden Bioassay. Des Weiteren ist das Analysegerät 16 mit einer optischen Messeinheit 21 zur Durchführung der Messung, einer Steuer- und Auswerteeinheit 22 sowie einer Ausgabeeinheit 23 (beispielsweise in Form eines Displays) versehen.

Wird nach Auswahl eines durchzuführenden Arrays mittels des Programmschalters 19 und anschließender Betätigung des Startknopfes 18 die Analyse gestartet, so werden von der Steuer- und Auswerteeinheit 22 in Abhängigkeit des vorgegebenen Protokolls für den Bioassay zeitgerecht im Analysegerät 16 vorhandene Aktoren 24 angesteuert und bewegen den Reagenzienträger 11 wie in bereits beschriebener Weise in Richtung der Assaykammer 2. Die Aktoren 24 sind dabei so ausgestaltet, dass sie neben einer reinen translatorischen Bewegung auch eine rotatorische Bewegung des Reagenzienträgers 11 ermöglichen.

Des Weiteren ist in Fig. 2 auch angedeutet, dass das Analysegerät 16 mit einem Magazin 20 für mehrere Reagenzienträger 11 ausgestattet sein kann. Dabei wäre es denkbar, dass jeder Reagenzienträger 11 je nach über den Programmwahlschalter 19 auszuwählender Bioassay mit unterschiedlichen Reagenzien R versehen ist. Nach entsprechender Auswahl des Bioassays wird dann vom Analysegerät 16 der entsprechend notwendige Reagenzienträger 11 ausgewählt und der Assaykammer 2 zugeführt.

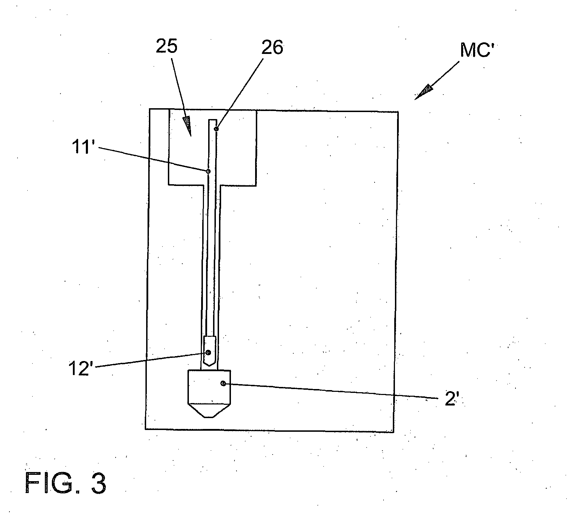

Wie in Fig. 3 äußerst prinziphaft angedeutet, wäre natürlich auch denkbar, eine aus einer mikrofluidischen Cartridge MC' und einem Reagenzienträger 11' bestehende (verkaufsfähige) Einheit bereitzustellen. Hierbei würde einer jeden solchen Einheit ein durchzuführender Bioassay zugeordnet werden können. Nach Auspacken der Einheit und Zuführung einer Probenlösung zu einer Assaykammer 2' in analoger Weise wie beschrieben, könnte die Einheit dann wiederum in ein entsprechend ausgestaltetes Analysegerät (nicht dargestellt) eingeführt werden, wobei der Reagenzienträger 11' an einem freistehenden ( innerhalb einer vorzusehenden Ausnehmung 25 der Cartridge MC' befindlichen) Endbereich 26 über entsprechende Aktoren des Analysegerätes wiederum bewegt bzw. in die Assaykammer 2' gebracht werden könnte.

### Bezugszeichenliste

- 1: mikrofluidisches Bauteil
- 2,2': Assaykammer
- 3: Befüllöffnung
- 4: Entlüftungsöffnung
- 5: Zulaufkanal
- 6: Ablaufkanal
- 7: erster Kammerbereich
- 8: zweiter Kammerbereich
- 9: Messfläche
- 10: Fenster
- 11,11': Reagenzienträger
- 12,12': spatelförmiges Ende
- 13: Zugang
- 14: Folienartiger Verschluss
- 15: Spitze
- 16: Analysegerät
- 17: Aufnahmeschlitz
- 18: Startknopf
- 19: Programmwahlschalter
- 20: Magazin für Reagenzienträger
- 21: Laser- und Messeinheit
- 22: Steuer- und Auswerteeinheit
- 23: Ausgabeeinheit
- 24: Aktoren
- 25: Ausnehmung für Aktoren des Analysegerätes
- 26: Endbereich des Reagenzienträgers als Angriffspunkt für Aktoren

- MC, MC': Mikrofluidische Cartridge
- P: Probenlösung
- R: Reagenz

## Patentansprüche

1. Verfahren zum Mischen wenigstens einer Probenlösung (P) mit Reagenzien (R) in wenigstens einer Kammer (2,2') einer mikrofluidischen Cartridge (MC), **wobei** dies Reagenzien (R) mittels wenigstens eines beweglichen Bauteils (11,11') der Probenlösung (P) zugeführt und mit dieser in Kontakt gebracht werden; wobei das bewegliche Bauteil (11,11') spatelartig (12,12') ausgestaltet ist, **dadurch gekennzeichnet, dass** das Spatelförmige Ende des beweglichen Bauteils (11,11') an seiner Vorderseite und an seiner Rückseite mit den Reagenzien (R) versehen ist, wobei auf der Vorderseite Fänger-Antikörper und auf der Rückseite Detektions-Antikörper immobilisiert sind und wobei das bewegliche Bauteil (11,11') zumindest während des Kontaktes der Reagenzien (R) mit der Probenlösung (P) eine kreisende Bewegung vollführt und wobei vor der Kontaktierung der Reagenzesien (R) mit der Probenlösung (P) das bewegliche Bauteil (11,11' wenigstens einen verschlossenen Zugang (14) zur Kammer (2) öffnet,

2. Verfahren nach Anspruch 1, **dadurch gekennzeichnet, dass** das bewegliche Bauteil (11,11') zumindest während des Kontaktes des Reagenzes (R) mit der Probenlösung (P) eine rotatorische Bewegung vollführt.

3. Verfahren nach einem der vorhergehenden Ansprüche 1 oder 2, **dadurch gekennzeichnet, dass** das bewegliche Bauteil (11,11') zumindest während des Kontaktes des Reagenzes (R) mit der Probenlösung (P) eine oszillierende Bewegung vollführt.

4. Verfahren nach einem der vorhergehenden Ansprüche 1 bis 3, **dadurch gekennzeichnet, dass** das bewegliche Bauteil (11,11') zumindest mit dem Teil (12,12'), an welchem das Reagenz (R) gehalten ist, derart in die Probenlösung (P) eingetaucht wird, dass das Reagenz (R) vollständig von der Probenlösung (P) umgeben ist.

## Claims

1. Method for mixing at least one sample solution (P) with reagents (R) in at least one chamber (2,2') of a microfluidic cartridge (MC), wherein the reagents (R) are supplied to the sample solution (P) and brought into contact therewith by means of at least one movable component (11,11'), the movable component (11, 11') being of spatulate (12,12') configuration, **characterised in that** the spatulate end of the movable component (11,11') is provided with the reagents (R) on its front side and on its back side, capture antibodies being immobilised on the front and detection antibodies being immobilised on the back, and wherein the movable component (11, 11') performs a circular movement at least during the contact of the reagents (R) with the sample solution (P), and before the reagents (R) are contacted with the sample solution (P) the movable component (11,11') opens up at least one closed access (14) to the chamber (2).

2. Method according to claim 1, **characterised in that** the movable component (11,11') performs a rotary movement at least during the contact of the reagent (R) with the sample solution (P).

3. Method according to at least one of the preceding claims 1 or 2, **characterised in that** the movable component (11,11') performs an oscillating movement at least during the contact of the reagent (R) with the sample solution (P).

4. Method according to at least one of the preceding claims 1 to 3, **characterised in that** the movable component (11,11') is immersed in the sample solution (P), at least with the part (12,12') on which the reagent (R) is held, such that the reagent (R) is completely surrounded by the sample solution (P).

## Revendications

1. Procédé de mélange d'au moins une solution d'échantillon (P) avec des réactifs (R) dans au moins une chambre (2, 2') d'une cartouche microfluidique (MC), dans lequel les réactifs (R) sont acheminés avec au moins un composant mobile (11, 11') de la solution d'échantillon (P) et sont mis en contact avec celle-ci, dans lequel le composant mobile (11, 11') a une configuration de type spatule (12, 12'), **caractérisé en ce que** l'extrémité en forme de spatule du composant mobile (11, 11') est dotée des réactifs (R) sur sa face avant et sur sa face arrière, dans lequel, sur la face avant, des anticorps de capture et, sur la face arrière, des anticorps de détection sont immobilisés, et dans lequel le composant mobile (11, 11') effectue au moins pendant le contact des réactifs (R) avec la solution d'échantillon (P) un mouvement circulaire, et dans lequel, avant la mise en contact des réactifs (R) avec la solution d'échantillon (P), le composant mobile (11, 11') ouvre au moins un accès fermé (14) à la chambre (2).

2. Procédé selon la revendication 1, **caractérisé en ce que** le composant mobile (11, 11') effectue un mouvement rotatif au moins pendant le contact du réactif (R) avec la solution d'échantillon (P).

3. Procédé selon l'une des revendications 1 ou 2 précédentes, **caractérisé en ce que** le composant mobile (11, 11') effectue un mouvement oscillant au moins pendant le contact du réactif (R) avec la solution d'échantillon (P).

4. Procédé selon l'une des revendications 1 à 3 précédentes, **caractérisé en ce que** le composant mobile (11, 11') est immergé, au moins avec la partie (12, 12') sur laquelle le réactif (R) est maintenu, dans la solution d'échantillon (P) de telle sorte que le réactif (R) soit complètement entouré par la solution d'échantillon (P).
